# EUROPEAN PATENT SPECIFICATION

(11) **EP 4 228 336 B1**
(45) Date of publication and mention of the grant of the patent: **21.10.2026**
(21) Application number: 23156480.8
(22) Date of filing: 14.02.2023
(51) Int. Cl.: H04W 52/02

(54) **EMLSR TARGET WAKE TIME OPERATION IN WIRELESS COMMUNICATIONS**
EMLSR-ZIELWECKZEITBETRIEB IN DER DRAHTLOSEN KOMMUNIKATION
OPÉRATION DE TEMPS DE RÉVEIL CIBLE EMLSR DANS DES COMMUNICATIONS SANS FIL

(30) Priority: 15.02.2022 US 202263310154 P; 13.02.2023 US 202318108854
(43) Date of publication of application: 16.08.2023
(73) Proprietor: MediaTek Singapore Pte. Ltd., Singapore 138628 (SG)
(72) Inventor: SEOK, Yongho, San Jose, 95134 (US); YEE, James Chih-Shi, San Jose, 95134 (US)
(74) Representative: Hoefer & Partner Patentanwälte mbB

(56) References cited:
- US-A1- 2021 007 168
- VISHNU RATNAM (SAMSUNG RESEARCH AMERICA): "EMLSR Primary Link PDT", vol. 802.11 EHT; 802.11be, 14 February 2022 (2022-02-14), pages 1 - 5, XP068188998, Retrieved from the Internet <URL:https://mentor.ieee.org/802.11/dcn/22/11-22-0335-00-00be-emlsr-primary-link-pdt.docx> [retrieved on 20220214]

## Description

### TECHNICAL FIELD

The present disclosure is generally related to wireless communications and, more particularly, to enhanced multi-link single-radio (EMLSR) target wake time (TWT) operation in wireless communications.

### BACKGROUND

Unless otherwise indicated herein, approaches described in this section are not prior art to the claims listed below and are not admitted as prior art by inclusion in this section.

In a wireless local area network (WLAN) according to the Institute of Electrical and Electronics Engineers (IEEE) 802.11 specifications, the concept of concurrent TWT agreements pertains to TWT agreements that are established on more than one link between an access point (AP) multi-link device (MLD) and a non-AP MLD, with the TWP service periods (SPs) of the TWT agreements overlapped in time. An AP MLD may not establish concurrent TWT agreements for a single-radio non-AP MLD, except when the single-radio non-AP MLD has enabled an EMLSR mode. In such a case, the AP MLD may establish concurrent TWT agreements with that single-radio non-AP MLD. However, details on TWT operations between the AP MLD and the non-AP MLD still need to be further defined at present time. Therefore, there is a need for a solution of EMLSR TWT operation in wireless communications.

US 2021/007168 D1 discloses a method and apparatus for singling between an AP MLD and a non-AP MLD.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to EMLSR TWT operation in wireless communications. Under various proposed schemes in accordance with the present disclosure, issues described herein may be addressed. A method and an apparatus according to the invention are defined in the independent claims. The dependent claims define preferred embodiments thereof.

In one aspect, a method may involve a first MLD enabling an EMLSR mode. The method may also involve the first MLD establishing concurrent TWT agreements with a second MLD on multiple links including at least a first link and a second link of a plurality of links. In establishing the concurrent TWT agreements, the method may involve a first STA affiliated with the first MLD transmitting a TWT request to a first peer STA affiliated with the second MLD, the TWT request containing a TWT element that comprises a Link Identifier (ID) Bitmap subfield indicating the multiple links on which the concurrent TWT agreements are requested to be established. In response, the method may involve the first STA receiving a TWT response from the first peer STA, the TWT response containing another TWT element that comprises another Link ID Bitmap subfield indicating the multiple links on which the concurrent TWT agreements are agreed to be established.

In another aspect, an apparatus implementable in a first MLD may include a transceiver and a processor coupled to the transceiver. The transceiver may be configured to communicate wirelessly with a second MLD. The processor may be configured to enable an EMLSR mode. Moreover, the processor may be configured to establish, via the transceiver, concurrent TWT agreements with the second MLD on multiple links including at least a first link and a second link of a plurality of links by: (i) transmitting, as a first STA affiliated with the first MLD, a TWT request to a first peer STA affiliated with the second MLD, the TWT request containing a TWT element that comprises a Link ID Bitmap subfield indicating the multiple links on which the concurrent TWT agreements are requested to be established; and (ii) receiving, as the first STA, a TWT response from the first peer STA, the TWT response containing another TWT element that comprises another Link ID Bitmap subfield indicating the multiple links on which the concurrent TWT agreements are agreed to be established.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial loT (IIoT) and narrowband loT (NB-loT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario in accordance with an implementation of the present disclosure.
FIG. 3 is a diagram of an example scenario in accordance with an implementation of the present disclosure.
FIG. 4 is a diagram of an example scenario in accordance with an implementation of the present disclosure.
FIG. 5 is a block diagram of an example communication system in accordance with an implementation of the present disclosure.
FIG. 6 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to EMLSR TWT operation in wireless communications. According to the present disclosure, a number of possible solutions may be implemented separately or jointly. That is, although these possible solutions may be described below separately, two or more of these possible solutions may be implemented in one combination or another.

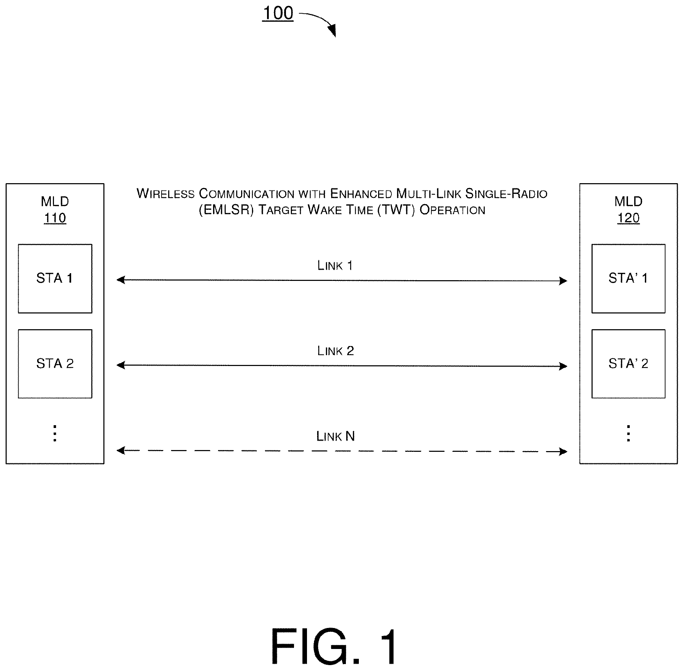

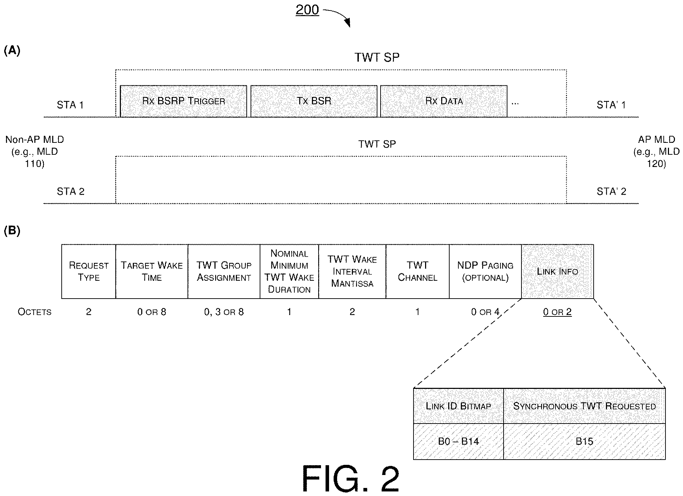

FIG. 1 illustrates an example network environment 100 in which various solutions and schemes in accordance with the present disclosure may be implemented. FIG. 2 ~ FIG. 6 illustrate examples of implementation of various proposed schemes in network environment 100 in accordance with the present disclosure. The following description of various proposed schemes is provided with reference to FIG. 1 ~ FIG. 6.

Referring to FIG. 1, network environment 100 may involve a first MLD (MLD 110) and a second MLD (MLD 120) communicating wirelessly over multiple links (e.g., link 1, link 2 and link 3), or in multiple frequency segments, in accordance with one or more IEEE 802.11 standards. Each of MLD 110 and MLD 120 may function as an AP MLD or a non-AP MLD. For instance, MLD 110 may function as a non-AP MLD with multiple virtual STAs operating within MLD 110, and MLD 120 may function as an AP MLD with multiple virtual APs operating within MLD 120. Alternatively, MLD 110 may function as an AP MLD with multiple virtual APs operating within MLD 110, and MLD 120 may function as a non-AP MLD with multiple virtual STAs operating within MLD 120. For illustrative purposes and without limiting the scope of the present disclosure, in FIG. 1, MLD 110 is shown to be affiliated with a number of AP or non-AP STAs (e.g., STA 1 and STA 2) and MLD 120 is shown to be affiliated with a number of AP or non-AP STAs (e.g., STA' 1 and STA' 2). It is noteworthy that, although a certain number of STAs (e.g., two) is shown to be affiliated with each of MLD 110 and MLD 120, in actual implementations a number *N* of STAs affiliated with each of MLD 110 and MLD 120 and the number of corresponding links therebetween may be the same or different. Under various proposed schemes in accordance with the present disclosure, MLD 110 and MLD 120 may be configured to perform EMLSR TWT operation in wireless communications according to various proposed schemes described herein. It is noteworthy that the various proposed schemes may be implemented individually or, alternatively, jointly (e.g., two or more of the proposed schemes implemented together), even though each of the various proposed schemes may be separately described below.

Under current IEEE specification, with respect to an EMLSR procedure, a non-AP MLD (e.g., MLD 110) may operate in the EMLSR mode on a specified set of one or more enabled links between the non-AP MLD and its associated AP MLD (e.g., MLD 120). The specified set of the one or more enabled links in which the EMLSR mode is applied may be referred to as EMLSR links. The EMLSR links may be indicated in an EMLSR Link Bitmap subfield of an enhanced multi-link (EML) Control field of an EML Operating Mode Notification frame by setting the bit positions of the EMLSR Link Bitmap subfield to 1. For the EMLSR mode enabled in a single-radio non-AP MLD (e.g., MLD 110), the STA(s) affiliated with the non-AP MLD that operates on the link(s) corresponding to the bit position(s) of the EMLSR Link Bitmap subfield set to 0 may be in a doze state in case that a STA affiliated with the non-AP MLD operating on one of the EMLSR links is in an awake state. Moreover, an MLD with *dot11EHTEMLSROptionImplemented* equal to 'true' may set an EML Capabilities Present subfield to 1 and may also set an EMLSR Support subfield of a Common Info field of the Basic Multi-Link element to 1 in all Management frames that include the Basic Multi-Link element (except Authentication frames). On the one hand, an MLD with *dot11EHTEMLSROptionImplemented* equal to 'false' and *dot11EHTEMLMROptionImplemented* equal to 'true' may set the EML Capabilities Present subfield to 1 and may also set the EMLSR Support subfield of the EML Capabilities subfield to 0. On the other hand, an MLD with *dot11EHTEMLSROptionImplemented* equal to 'false' and *dot11EHTEMLMROptionImplemented* equal to 'false' may set the EML Capabilities Present subfield to 0.

With respect to carrying out the EMLSR procedure, when a non-AP MLD (e.g., MLD 110) with *dot11EHTEMLSROptionImplemented* equal to 'true' intends to operate in the EMLSR mode on the EMLSR links, a STA affiliated with the non-AP MLD may transmit an EML Operating Mode Notification frame, with the EMLSR Mode subfield of the EML Control field of the frame set to 1, to an AP affiliated with an AP MLD (e.g., MLD 120) with *dot11EHTEMLSROptionlmplemented* equal to 'true'. Additionally, an AP affiliated with the AP MLD that received the EML Operating Mode Notification frame from the STA affiliated with the non-AP MLD may transmit an EML Operating Mode Notification frame to one of the STAs affiliated with the non-AP MLD within a timeout interval indicated in the Transition Timeout subfield in the EML Capabilities subfield of the Basic Multi-Link element, starting at the end of a physical-layer protocol data unit (PPDU) transmitted by the AP affiliated with the AP MLD, as an acknowledgement to the EML Operating Mode Notification frame transmitted by the STA affiliated with the non-AP MLD. After a successful transmission of the EML Operating Mode Notification frame on one of the EMLSR links by the STA affiliated with the non-AP MLD, the non-AP MLD may operate in the EMLSR mode and the STAs on the other links of the EMLSR links may transition to an active mode after a transition delay indicated in the Transition Timeout subfield in the EML Capabilities subfield of the Basic Multi-Link element or, alternatively, immediately after receiving an EML Operating Mode Notification frame from one of the APs operating on the EMLSR links and affiliated with the AP MLD. Moreover, a STA on one of the other links of the EMLSR links may not transmit a frame with a Power Management subfield set to 1 before receiving the EML Operating Mode Notification frame from the AP affiliated with the AP MLD or before the end of the timeout interval.

With respect to disabling or existing the EMLSR procedure, when a non-AP MLD (e.g., MLD 110) with *dot11EHTEMLSROptionImplemented* equal to 'true' intends to disable the EMLSR mode, a STA affiliated with the non-AP MLD may transmit an EML Operating Mode Notification frame, with the EMLSR Mode subfield of the EML Control field of the frame set to 0, to an AP affiliated with an AP MLD (e.g., MLD 120) with *dot11EHTEMLSROptionImplemented* equal to 'true'. Correspondingly, an AP affiliated with the AP MLD that received the EML Operating Mode Notification frame from the STA affiliated with the non-AP MLD may transmit an EML Operating Mode Notification frame to one of the STAs affiliated with the non-AP MLD within a timeout interval indicated in the Transition Timeout subfield in the EML Capabilities subfield of the Basic Multi-Link element, starting at the end of the PPDU transmitted by the AP affiliated with the AP MLD, as an acknowledgement to the EML Operating Mode Notification frame transmitted by the STA affiliated with the non-AP MLD. After a successful transmission of the EML Operating Mode Notification frame on one of the EMLSR links by the STA affiliated with the non-AP MLD, the non-AP MLD may disable the EMLSR mode and the STAs on the other links of the EMLSR links may transition to a power-save mode after a transition delay indicated in the Transition Timeout subfield in the EML Capabilities subfield of the Basic Multi-Link element or immediately after receiving an EML Operating Mode Notification frame from one of the APs operating on the EMLSR links and affiliated with the AP MLD. Furthermore, a STA on one of the other links of the EMLSR links may not transmit a frame with the Power Management subfield set to 0 before receiving the EML Operating Mode Notification frame from the AP affiliated with the AP MLD or before the end of the timeout interval.

When a non-AP MLD (e.g., MLD 110) is operating in the EMLSR mode with an AP MLD (e.g., MLD 120) supporting the EMLSR mode, certain conditions may apply, as described below. For instance, the non-AP MLD may be able to listen on the EMLSR links, by having its affiliated STA(s) corresponding to those links in an awake state. The listening operation may include clear channel assessment (CCA) and receiving an initial Control frame of frame exchanges that is initiated by the AP MLD. Additionally, the initial Control frame of frame exchanges may be sent in an orthogonal frequency-division multiplexing (OFDM) PPDU or non-high-throughput (non-HT) duplicate PPDU format using a rate of 6 Mbps, 12 Mbps, or 24 Mbps. Also, the initial Control frame may be a multi-user request-to-send (MU-RTS) Trigger frame or a Buffer Status Report Poll (BSRP) Trigger frame, and reception of MU-RTS and BSRP Trigger frames may be mandatory for a non-AP MLD that is in the EMLSR mode. The number of spatial streams for a response to the BSRP Trigger frame may be limited to one. Moreover, the non-AP MLD may indicate a delay time duration in an EMLSR Padding Delay subfield of the EML Capabilities subfield in the Common Info field of the Basic Multi-Link element. Furthermore, an AP affiliated with the AP MLD that initiates frame exchanges with the non-AP MLD on one of the EMLSR links may begin the frame exchanges by transmitting the initial Control frame to the non-AP MLD with the limitations specified above. After receiving the initial Control frame of frame exchanges, a STA affiliated with the non-AP MLD that was listening on the corresponding link may transmit or receive frames on the link on which the initial Control frame was received but may not transmit or receive on the other EMLSR link(s) until the end of the frame exchanges. Subject to its spatial stream capabilities, operation mode, and link switch delay, the STA affiliated with the non-AP MLD may be capable of receiving a PPDU that is sent using more than one spatial stream on the link on which the initial Control frame was received a short inter-frame space (SIFS) after the end of its response frame transmission solicited by the initial Control frame. During the frame exchanges, the other AP(s) affiliated with the AP MLD may not transmit frames to the other STA(s) affiliated with the non-AP MLD on the other EMLSR link(s).

The non-AP MLD may be switched back to the listening operation on the EMLSR links after the time indicated in the EMLSR Transition Delay subfield of the EML Capabilities subfield in the Common Info field of the Basic Multi-Link element in case that any of certain conditions described below is met and this may be defined as the end of the frame exchanges. For instance, a medium access control (MAC) layer of the STA affiliated with the non-AP MLD that received the initial Control frame does not receive a *PHY-RXSTART.indication* primitive during a timeout interval of *aSIFSTime + aSlotTime + aRxPHYStartDelay* starting at the end of a PPDU transmitted by the STA of the non-AP MLD as a response to a most recently received frame from the AP affiliated with the AP MLD or, alternatively, starting at the end of the reception of a PPDU containing a frame for the STA from the AP affiliated with the AP MLD that does not require immediate acknowledgement. Additionally, the MAC layer of the STA affiliated with the non-AP MLD that received the initial Control frame receives a *PHY-RXSTART. indication* primitive during a timeout interval of *aSIFSTime + aSlotTime + aRxPHYStartDelay* starting at the end of a PPDU transmitted by the STA of the non-AP MLD as a response to the most recently received frame from the AP affiliated with the AP MLD or, alternatively, starting at the end of the reception of the PPDU containing a frame for the STA from the AP affiliated with the AP MLD that does not require immediate acknowledgement and the STA affiliated with the non-AP MLD does not detect, within the PPDU corresponding to the *PHY-RXSTART. indication* any of the following frames: (a) an individually addressed frame with the RA equal to the MAC address of the STA affiliated with the non-AP MLD, (b) a Trigger frame that has one of the User Info fields addressed to the STA affiliated with the non-AP MLD, (c) a CTS-to-self frame with the RA equal to the MAC address of the AP affiliated with the AP MLD, (d) a Multi-STA Block Acknowledgement (BlockAck) frame that has one of the Per Association Identifier (AID) traffic identifier (TID) Info fields addressed to the STA affiliated with the non-AP MLD, and (e) a Neighbor Discovery Protocol (NDP) Announcement frame that has one of the STA Info fields addressed to the STA affiliated with the non-AP MLD. Lastly, the STA affiliated with the non-AP MLD that received the initial Control frame does not respond to the most recently received frame from the AP affiliated with the AP MLD that requires immediate response after a SIFS.

There may be other conditions that apply when a non-AP MLD (e.g., MLD 110) is operating in the EMLSR mode with an AP MLD (e.g., MLD 120) supporting the EMLSR mode, as described below. For instance, the AP affiliated with the AP MLD may transmit, before a transmission network allocation vector (TXNAV) timer expires, another initial Control frame addressed to the STA affiliated with the non-AP MLD in case that the AP intends to continue the frame exchanges with the STA and did not receive the response frame from this STA for the most recently transmitted frame that requires an immediate response after a SIFS. When a STA of the non-AP MLD initiates a transmission opportunity (TXOP), the non-AP MLD may switch back to the listening operation on the EMLSR links after the time duration indicated in the EMLSR Transition Delay subfield after the end of the TXOP. Moreover, only one STA affiliated with the non-AP MLD that is operating on one of the EMLSR links may initiate frame exchanges with the AP MLD.

FIG. 2 illustrates an example scenario 200 under a proposed scheme of an EMLSR TWT operation in accordance with the present disclosure. Part (A) of FIG. 2 shows STA 1 and STA 2 affiliated with MLD 110 being in an EMLSR TWT operation with MLD 120 on link 1 and link 2, respectively. With concurrent TWT agreements, a TWT SP of the TWT agreements on link 1 and link 2 may overlap in time. During the TWT SP, STA 1 may, on link 1, receive a BSRP Trigger frame and, in response, transmit a buffer status report (BSR) before receiving data from a corresponding AP (e.g., AP 1) affiliated with MLD 120. Meanwhile, due to EMLSR, STA 2 do not receive anything on link 2 during the TWT SP. Part (B) of FIG. 2 shows an example format of an individual TWT information element (IE) (herein interchangeably referred to as "TWT element") under the proposed scheme. The TWT element may include a TWT Parameter Set having a number of parameters, such as those shown in part (B) of FIG, including a Link Info parameter which may include a Link ID Bitmap subfield (e.g., occupying fifteen bits of B0 ~ B14) and a Synchronous TWT Request subfield (e.g., occupying one bit of B15). A predefined value (e.g., 1) in the Synchronous TWT Request subfield may indicate that the multiple links indicated by the Link ID Bitmap subfield need to be aligned with respect to TWT SPs on all those multiple links; and a different value (e.g., 0) in the Synchronous TWT Request subfield may indicate otherwise.

Under a proposed scheme in accordance with the present disclosure with respect to TWT agreements, a STA affiliated with an MLD (e.g., MLD 110) may indicate the link(s) that are requested for setting up TWT agreement(s) in the Link ID Bitmap subfield, if present, of a TWT element in a soliciting TWT request transmitted to another STA affiliated with a peer MLD (e.g., MLD 120). In an event that only one link is indicated in the Link ID Bitmap subfield of the TWT element, a single TWT agreement may be requested on behalf of the STA affiliated with the same MLD and that is operating on the indicated link. The Target Wake Time field of the TWT element may be in reference to the timing synchronization function (TSF) time of the link indicated by the TWT element. Moreover, under the proposed scheme, a STA affiliated with a peer MLD (e.g., MLD 120 or MLD 110) that receives a TWT request containing a Link ID Bitmap subfield in a TWT element may respond with a TWT response that indicates the link(s) in the Link ID Bitmap field of a TWT element. The link(s), if present, in the TWT element in the TWT response, may be the same as the link(s) indicated in the TWT element of the soliciting TWT request.

Under a proposed scheme in accordance with the present disclosure with respect to negotiation of TWT agreements, during a negotiation of TWT agreements, a TWT-requesting STA affiliated with an MLD (e.g., MLD 110 or MLD 120) and a TWT-responding STA affiliated with another MLD (e.g., MLD 120 or MLD 110) may include multiple TWT elements, with each of the Link ID Bitmap subfields in each TWT element indicating different link(s) in the same TWT Setup frame. The TWT parameters provided by each TWT element may be applied and be in reference to a respective link that is indicated in the TWT element. Furthermore, a STA affiliated with a peer MLD that receives a soliciting TWT request that contains multiple TWT elements may respond with a TWT response that indicates the links in the Link ID Bitmap field of a TWT element. The links in the TWT element in the TWT response may be the same as the links indicated in the TWT element of the soliciting TWT request.

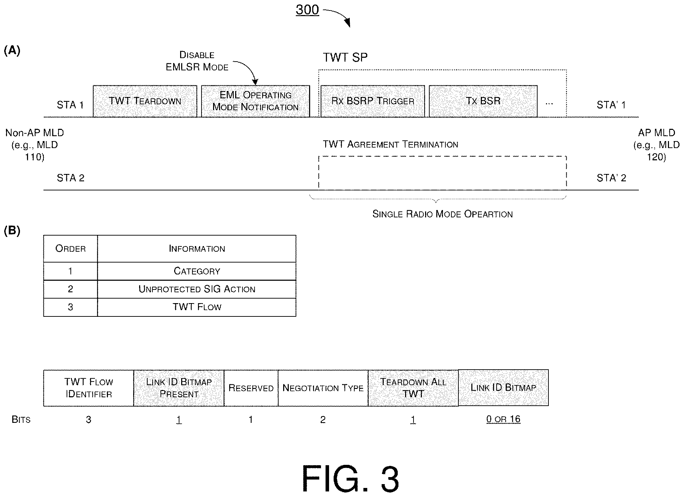

FIG. 3 illustrates an example scenario 300 under a proposed scheme of termination of an EMLSR TWT operation in accordance with the present disclosure. Part (A) of FIG. 3 shows STA 1 and STA 2 of MLD 110 being in an EMLSR TWT operation with MLD 120 on link 1 and link 2, respectively. Part (B) of FIG. 3 shows an example format of TWT Teardown frame Action field. Under the proposed scheme, for STA 1 affiliated with a non-AP MLD (e.g., MLD 110) that enabled an EMLSR mode and established concurrent TWT agreements on multiple links with a peer MLD (e.g., MLD 120), a TWT Teardown frame may be sent by the non-AP MLD to terminate concurrent TWT agreements (e.g., with respect to both of link 1 and link 2) before switching from the EMLSR mode to a Single Radio mode (e.g., on link 1). Referring to part (A) FIG. 3, the TWT Teardown frame may terminate a TWT agreement of STA2 affiliated with the non-AP MLD (e.g., on link 2). In consequence, the TWT agreement may exist only on a single link (e.g., on link 1), not concurrently on multiple links.

Referring to part (B) of FIG. 3, a TWT Teardown frame Action field format is shown. Specifically, a TWT Flow field of the TWT Teardown frame may include a number of subfields including a TWT Flow Identifier subfield, a Link ID Bitmap Present subfield, a Reserved subfield, a Negotiation Type subfield, a Teardown All TWT subfield, and a Teardown Link ID Bitmap subfield. The Teardown Link ID Bitmap subfield may be present when a value of the Link ID Bitmap Present subfield is equal to 1; otherwise, the Teardown Link ID Bitmap subfield may not be present. The Teardown Link ID Bitmap subfield may indicate the links to which termination of concurrent TWT agreements due to the TWT Teardown frame sent by a STA affiliated with an MLD applies. A value of 1 in bit position i of the Teardown Link ID Bitmap subfield may mean that the link to which termination of concurrent TWT agreements due to the TWT Teardown frame sent by a STA affiliated with an MLD applies. Conversely, a value of 0 in bit position i of the Teardown Link ID Bit map subfield may mean that the link associated with the link ID i is not the link to which the TWT Teardown frame sent by a STA affiliated with an MLD applies. That is, the TWT agreement on each of the links indicated in the Teardown Link ID Bitmap subfield with a value of 1 is to be terminated or otherwise torn down. Moreover, under the proposed scheme, the Teardown All TWT subfield may be set to 1 by the STA to indicate that the TWT Teardown frame is to terminate or otherwise tear down all TWT agreements on all links. Alternatively, the Teardown All TWT subfield may be set to 0 to indicate otherwise.

Under a proposed scheme in accordance with the present disclosure with respect to EMLSR TWT operation, a STA affiliated with an MLD may negotiate individual TWT agreements with another STA affiliated with another MLD, with some exceptions. One exception may be that the STA affiliated with the MLD may indicate the link(s) that are requested for setting up TWT agreement(s) in the Link ID Bitmap subfield, if present, of a TWT element in the TWT request. In case that only one link is indicated in the Link ID Bitmap subfield of the TWT element, a single TWT agreement may be requested on behalf of the STA affiliated with the same MLD and that is operating on the indicated link. The Target Wake Time field of the TWT element may be in reference to the TSF time of the link indicated by the TWT element. Another exception may be that the STA affiliated with the MLD may indicate the link(s) that are requested for tearing down TWT agreement(s) in the Link ID Bitmap subfield, if present, of a TWT Teardown frame. In case that only one link is indicated in the Link ID Bitmap subfield of the TWT Teardown frame, a single TWT teardown may be requested on behalf of the STA affiliated with the same MLD and that is operating on the indicated link.

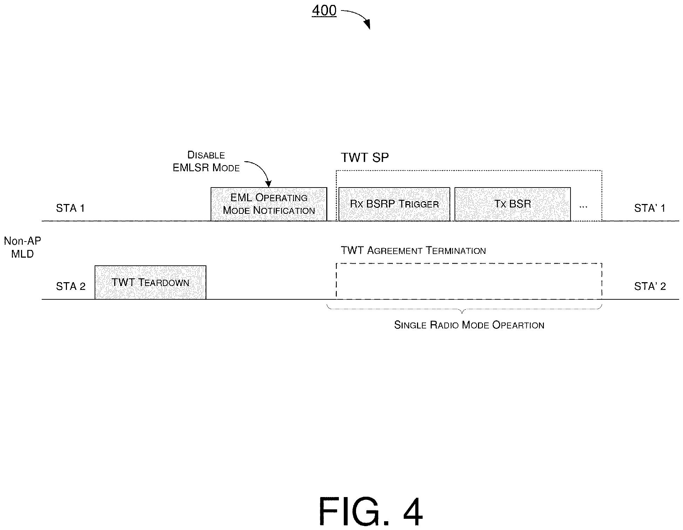

FIG. 4 illustrates an example scenario 400 under a proposed scheme of an EMLSR TWT operation in accordance with the present disclosure. Under the proposed scheme, a STA affiliated with an MLD may negotiate individual TWT agreements with another STA affiliated with another MLD, with some exceptions. One exception may be that, in an event that the Link ID Bitmap subfield is not present in a TWT Teardown frame, the MLD may send the TWT Teardown frame on the link that it requests for tearing down TWT agreement(s), as shown in FIG. 4. Referring to FIG. 4, as a TWT Teardown frame without the Link ID Bitmap subfield may be sent by STA 2 on link 2, consequently the TWT agreement on link 2 (but not on link 1) may be terminated or otherwise torn down. Another exception may be that, in an event that the MLD intends to terminate all TWTs established on all links, the MLD may set all bit values of bit positions for all links that the MLD has set up in the Link Bitmap subfield to 1.

Under a proposed scheme in accordance with the present disclosure with respect to negotiation of a wake Target Beacon Transmission Time (TBTT) and a wake interval, a TBTT-scheduled STA that intends to operate in the power-save mode may transmit a TWT request to a TBTT-scheduling AP that identifies the wake TBTT of a first Beacon frame and the wake interval between subsequent Beacon frames the STA intends to receive. Under the proposed scheme, the TWT request may contain a number of subfields including: (a) a Negotiation Type subfield equal to 1 and a TWT Setup Command field set to Suggest TWT or Demand TWT, (b) a requested first wake TBTT in the Target Wake Time field, (c) a requested wake interval between consecutive TBTTs in TWT Wake Interval Mantissa and TWT Wake Interval Exponent fields, (d) a requested TBTT wake duration in a Nominal Minimum TWT Wake Duration field, and (e) all other fields in the TWT element which may be reserved. Under the proposed scheme, a TBTT-scheduling AP that receives a TWT request from a STA, whose value of the Negotiation Type subfield is 1, may respond with a TWT response that contains Accept TWT, Alternate TWT, or Reject TWT in the TWT Setup Command field. In case of an Accept TWT, the TWT response may also contain the following subfields: (a) a Negotiation Type subfield equal to 1, (b) an allocated first wake TBTT in the Target Wake Time field, (c) an allocated wake interval between consecutive TBTTs in the TWT Wake Interval Mantissa and TWT Wake Interval Exponent fields, (d) an allocated TBTT wake duration in the Nominal Minimum TWT Wake Duration field, and (e) all other fields in the TWT element which may be reserved.

Under the proposed scheme, after successfully completing the negotiation, the TBTT-scheduled STA may enter the doze state until its TSF matches the next negotiated wake TBTT provided that the STA is in the power-save mode, with no other condition requiring the STA to remain awake. The TBTT-scheduled STA may be in the awake state to listen to Beacon frames transmitted at negotiated wake TBTTs and may operate as per the Rules for TWT scheduled STA. In an event that the TBTT-scheduled STA receives a Beacon frame from the TBTT-scheduling AP at or after a TBTT, the TBTT-scheduled STA may enter the doze state until the next wake TBTT in case of no other condition requiring the STA to remain awake. The TBTT-scheduled STA may enter the doze state after a nominal minimum TBTT wake duration time has elapsed from the TBTT start time in case of no other condition requiring the STA to remain awake. Moreover, either STA that is a party to an established wake TBTT agreement may tear down the wake TBTT agreement by following the teardown procedure and by setting the Negotiation Type subfield to 1 in the TWT Teardown frame.

Under a proposed scheme in accordance with the present disclosure with respect to an EMLSR TBTT negotiation, a STA affiliated with a non-AP MLD (e.g., MLD 110) operating in an EMLSR mode may negotiate a wake TBTT and wake interval with an AP affiliated with an AP MLD (MLD 120). When a first STA (e.g., STA 1) affiliated with the non-AP MLD negotiated a wake TBTT and a wake interval with a first AP (e.g., AP 1) affiliated with the AP MLD to receive Beacon frames on one of EMLSR links, a second AP (e.g., AP 2) affiliated with the AP MLD may end frame exchanges initiated with a second STA (e.g., STA 2) affiliated with the non-AP MLD in another EMLSR link at least an EMLSR transition delay, as indicated in the EMLSR Transition Delay subfield, before the first AP affiliated with the same AP MLD schedules for transmission of Beacon frame at the negotiated TBTT. Alternatively, or additionally, when a first STA (e.g., STA 1) affiliated with the non-AP MLD negotiated a wake TBTT and a wake interval with a first AP (e.g., AP 1) affiliated with the AP MLD to receive Beacon frames on one of EMLSR links, a second AP (e.g., AP 2) affiliated with the non-AP MLD that initiates frame exchanges in another EMLSR link may end the TXOP at least an EMLSR transition delay, as indicated in the EMLSR Transition Delay subfield, before the first STA affiliated with the same non-AP MLD receives the Beacon frame scheduled at the negotiated TBTT.

### Illustrative Implementations

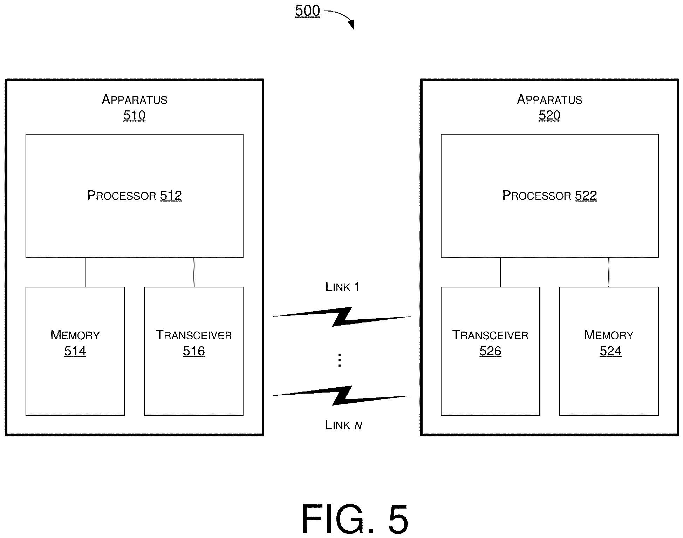

FIG. 5 illustrates an example system 500 having at least an example apparatus 510 and an example apparatus 520 in accordance with an implementation of the present disclosure. Each of apparatus 510 and apparatus 520 may perform various functions to implement schemes, techniques, processes and methods described herein pertaining to EMLSR TWT operation in wireless communications, including the various schemes described above with respect to various proposed designs, concepts, schemes, systems and methods described above as well as processes described below. For instance, apparatus 510 may be an example implementation of MLD 110, and apparatus 520 may be an example implementation of MLD 120.

Each of apparatus 510 and apparatus 520 may be a part of an electronic apparatus such as, for example and without limitation, a portable or mobile apparatus, a wearable apparatus, a wireless communication apparatus or a computing apparatus. For instance, each of apparatus 510 and apparatus 520 may be implemented in a smartphone, a smart watch, a personal digital assistant, a digital camera, or a computing equipment such as a tablet computer, a laptop computer or a notebook computer. Each of apparatus 510 and apparatus 520 may also be a part of a machine type apparatus, which may be an loT apparatus such as an immobile or a stationary apparatus, a home apparatus, a wire communication apparatus or a computing apparatus. For instance, each of apparatus 510 and apparatus 520 may be implemented in a smart thermostat, a smart fridge, a smart door lock, a wireless speaker or a home control center. When implemented in or as a network apparatus, apparatus 510 and/or apparatus 520 may be implemented in a network node, such as an AP in a WLAN.

In some implementations, each of apparatus 510 and apparatus 520 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Each of apparatus 510 and apparatus 520 may include at least some of those components shown in FIG. 5 such as a processor 512 and a processor 522, respectively, for example. Each of apparatus 510 and apparatus 520 may further include one or more other components not pertinent to the proposed scheme of the present disclosure (e.g., internal power supply, display device and/or user interface device), and, thus, such component(s) of apparatus 510 and apparatus 520 are neither shown in FIG. 5 nor described below in the interest of simplicity and brevity.

In one aspect, each of processor 512 and processor 522 may be implemented in the form of one or more single-core processors, one or more multi-core processors, one or more RISC processors or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks including those pertaining to EMLSR TWT operation in wireless communications in accordance with various implementations of the present disclosure.

In some implementations, apparatus 510 may also include a transceiver 516 coupled to processor 512. Transceiver 516 may be capable of wirelessly transmitting and receiving data. In some implementations, apparatus 520 may also include a transceiver 526 coupled to processor 522. Transceiver 526 may include a transceiver capable of wirelessly transmitting and receiving data. Transceiver 516 of apparatus 510 and transceiver 526 of apparatus 520 may communicate each other over one or more of multiple links link 1 ~ link N, with N being a positive integer greater than 1, such as a first link and a second link.

In some implementations, apparatus 510 may further include a memory 514 coupled to processor 512 and capable of being accessed by processor 512 and storing data therein. In some implementations, apparatus 520 may further include a memory 524 coupled to processor 522 and capable of being accessed by processor 522 and storing data therein. Each of memory 514 and memory 524 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 514 and memory 524 may include a type of read-only memory (ROM) such as mask ROM, programmable ROM (PROM), erasable programmable ROM (EPROM) and/or electrically erasable programmable ROM (EEPROM). Alternatively, or additionally, each of memory 514 and memory 524 may include a type of non-volatile random-access memory (NVRAM) such as flash memory, solid-state memory, ferroelectric RAM (FeRAM), magnetoresistive RAM (MRAM) and/or phase-change memory.

Each of apparatus 510 and apparatus 520 may be a communication entity capable of communicating with each other using various proposed schemes in accordance with the present disclosure. For illustrative purposes and without limitation, a description of capabilities of apparatus 510, as MLD 110 which may be a non-AP MLD, and apparatus 520, as MLD 120 which may be an AP MLD, is provided below. It is noteworthy that, although the example implementations described below are provided in the context of WLAN, the same may be implemented in other types of networks.

Under a proposed scheme with respect to EMLSR TWT operation in wireless communications in accordance with the present disclosure, processor 512 of apparatus 510, as a first MLD (e.g., MLD 110), may enable an EMLSR mode (e.g., to cause MLD 110 to enter the EMLSR mode). Additionally, processor 512 may establish, via transceiver 516, concurrent TWT agreements with apparatus 520, as a second MLD (e.g., MLD 120), on multiple links including at least a first link and a second link of a plurality of links. In establishing the concurrent TWT agreements, processor 512 may perform certain operations. For instance, processor 512 may transmit, as a first STA affiliated with the first MLD, a TWT request to a first peer STA affiliated with the second MLD, the TWT request containing a TWT element that comprises a Link ID Bitmap subfield indicating the multiple links on which the concurrent TWT agreements are requested to be established. Additionally, processor 512 may receive, as the first STA, a TWT response from the first peer STA, the TWT response containing another TWT element that comprises another Link ID Bitmap subfield indicating the multiple links on which the concurrent TWT agreements are agreed to be established.

In some implementations, the TWT element may further include a Synchronous TWT Requested subfield. In such cases, in response to a predefined value being set in the Synchronous TWT Requested subfield, all of the multiple links may be aligned with respect to TWT SPs on the multiple links.

In some implementations, processor 512 may terminate the concurrent TWT agreements with the second MLD by transmitting a TWT Teardown frame before switching from the EMLSR mode to a single-radio mode.

In some implementations, in terminating the concurrent TWT agreements, processor 512 may terminate the concurrent TWT agreements by terminating a TWT agreement on the second link responsive to the TWT Teardown frame indicating termination of the TWT agreement on the second link.

In some implementations, the TWT Teardown frame may include at least a Link ID Bitmap Present subfield indicating whether or not a Teardown Link ID Bitmap subfield is present in the TWT Teardown frame. In such cases, in response to the Link ID Bitmap Present subfield indicating the Teardown Link ID Bitmap subfield being present in the TWT Teardown frame, the Teardown Link ID Bitmap subfield may indicate one or more links of the multiple links to which the terminating applies. Alternatively, or additionally, the TWT Teardown frame may include at least a Teardown All TWT subfield. In such cases, in response to a predefined value being set in the Teardown All TWT subfield, the terminating may involve terminating the concurrent TWT agreements on all of the multiple links.

In some implementations, in terminating the concurrent TWT agreements, processor 512 may transmit, as the first STA, the TWT Teardown frame to the first peer STA on the first link to indicate termination of a respective TWT agreement on at least one link of the multiple links. Alternatively, or additionally, in terminating the concurrent TWT agreements, processor 512 may transmit, as a second STA affiliated with the first MLD, the TWT Teardown frame to a second peer STA affiliated with the second MLD on the second link with no Teardown Link ID Bitmap subfield in the TWT Teardown frame to indicate termination of a respective TWT agreement on the second link.

In some implementations, processor 512 may perform additional operations. For instance, processor 512 may negotiate, as the first STA, a TBTT and a wake interval with a first peer STA affiliated with the second MLD while in the EMLSR mode. Moreover, processor 512 may receive, as the first STA, one or more beacon frames from the first peer STA on one link of one or mor EMLSR links of the plurality of links according to the negotiated TBTT and wake interval, In some implementations, the first MLD may be a non-AP MLD, and the second MLD may be an AP MLD with the first peer STA being a first AP.

In some implementations, in receiving the one or more beacon frames, processor 512 and processor 522 may perform certain operations. For instance, processor 522 may, as a second AP affiliated with the second MLD, end frame exchanges initiated with a second STA affiliated with the first MLD on one other link of the one or more EMLSR links at least an EMLSR transition delay before the first AP transmits each of the one or more beacon frames at the negotiated TBTT. Furthermore, processor 512 may, as the second STA, end a TXOP on the one other link at least the EMLSR transition delay before the first STA receives each of the one or more beacon frames at the negotiated TBTT. In such cases, the EMLSR transition delay may be indicated in an EMLSR Transition Delay subfield of an EML Capabilities subfield in a Common Info field of a Basic Multi-Link element in a management frame transmitted between the first MLD and the second MLD.

### Illustrative Processes

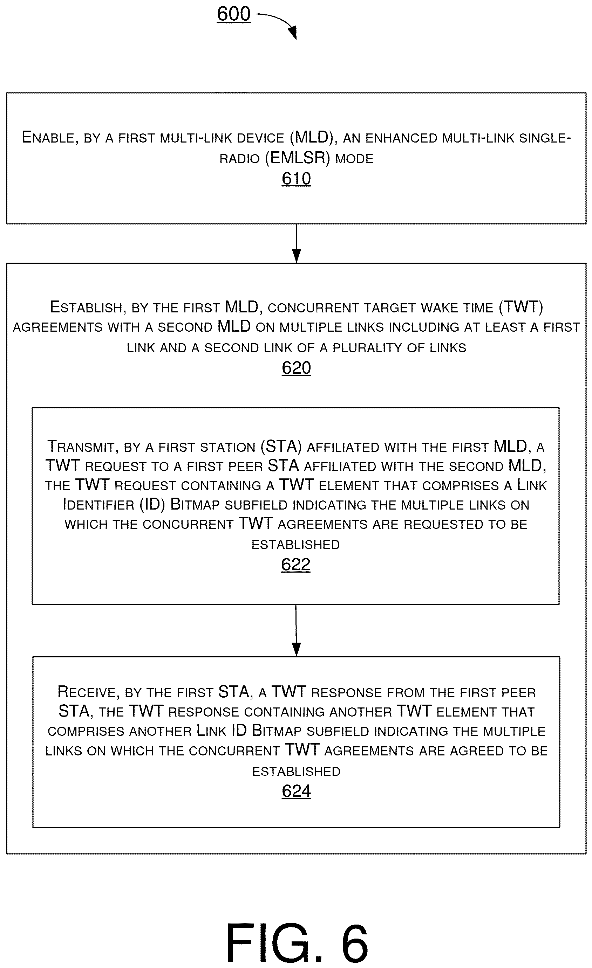

FIG. 6 illustrates an example process 600 in accordance with an implementation of the present disclosure. Process 600 may represent an aspect of implementing various proposed designs, concepts, schemes, systems and methods described above. More specifically, process 600 may represent an aspect of the proposed concepts and schemes pertaining to EMLSR TWT operation in wireless communications in accordance with the present disclosure. Process 600 may include one or more operations, actions, or functions as illustrated by one or more of blocks 610 and 620 as well as subblocks 622 and 624. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively in a different order. Furthermore, one or more of the blocks/sub-blocks of process 600 may be executed repeatedly or iteratively. Process 600 may be implemented by or in apparatus 510 and apparatus 520 as well as any variations thereof. Solely for illustrative purposes and without limiting the scope, process 600 is described below in the context of apparatus 510 as MLD 110 (e.g., a non-AP MLD) and apparatus 520 as MLD 120 (e.g., a peer STA MLD or AP MLD) of a wireless network such as a WLAN in accordance with one or more of IEEE 802.11 standards. Process 600 may begin at block 610.

At 610, process 600 may involve processor 512 of apparatus 510, as a first MLD (e.g., MLD 110), enabling an EMLSR mode (e.g., to cause MLD 110 to enter the EMLSR mode). Process 600 may proceed from 610 to 620.

At 620, process 600 may involve processor 512 establishing, via transceiver 516, concurrent TWT agreements with apparatus 520, as a second MLD (e.g., MLD 120), on multiple links including at least a first link and a second link of a plurality of links. In establishing the concurrent TWT agreements, process 600 may involve processor 512 performing certain operations as represented by 622 and 624.

At 622, process 600 may involve processor 512 transmitting, as a first STA affiliated with the first MLD, a TWT request to a first peer STA affiliated with the second MLD, the TWT request containing a TWT element that comprises a Link ID Bitmap subfield indicating the multiple links on which the concurrent TWT agreements are requested to be established. Process 600 may proceed from 622 to 624.

At 624, process 600 may involve processor 512 receiving, as the first STA, a TWT response from the first peer STA, the TWT response containing another TWT element that comprises another Link ID Bitmap subfield indicating the multiple links on which the concurrent TWT agreements are agreed to be established.

In some implementations, the TWT element may further include a Synchronous TWT Requested subfield. In such cases, in response to a predefined value being set in the Synchronous TWT Requested subfield, all of the multiple links may be aligned with respect to TWT SPs on the multiple links.

In some implementations, process 600 may further involve processor 512 terminating the concurrent TWT agreements with the second MLD by transmitting a TWT Teardown frame before switching from the EMLSR mode to a single-radio mode.

In some implementations, in terminating the concurrent TWT agreements, process 600 may involve processor 512 terminating the concurrent TWT agreements by terminating a TWT agreement on the second link responsive to the TWT Teardown frame indicating termination of the TWT agreement on the second link.

In some implementations, the TWT Teardown frame may include at least a Link ID Bitmap Present subfield indicating whether or not a Teardown Link ID Bitmap subfield is present in the TWT Teardown frame. In such cases, in response to the Link ID Bitmap Present subfield indicating the Teardown Link ID Bitmap subfield being present in the TWT Teardown frame, the Teardown Link ID Bitmap subfield may indicate one or more links of the multiple links to which the terminating applies. Alternatively, or additionally, the TWT Teardown frame may include at least a Teardown All TWT subfield. In such cases, in response to a predefined value being set in the Teardown All TWT subfield, the terminating may involve terminating the concurrent TWT agreements on all of the multiple links.

In some implementations, in terminating the concurrent TWT agreements, process 600 may involve processor 512 transmitting, as the first STA, the TWT Teardown frame to the first peer STA on the first link to indicate termination of a respective TWT agreement on at least one link of the multiple links. Alternatively, or additionally, in terminating the concurrent TWT agreements, process 600 may involve processor 512 transmitting, as a second STA affiliated with the first MLD, the TWT Teardown frame to a second peer STA affiliated with the second MLD on the second link with no Teardown Link ID Bitmap subfield in the TWT Teardown frame to indicate termination of a respective TWT agreement on the second link.

In some implementations, process 600 may further involve processor 512 performing additional operations. For instance, process 600 may involve processor 512 negotiating, as the first STA, a TBTT and a wake interval with a first peer STA affiliated with the second MLD while in the EMLSR mode. Moreover, process 600 may involve processor 512 receiving, as the first STA, one or more beacon frames from the first peer STA on one link of one or mor EMLSR links of the plurality of links according to the negotiated TBTT and wake interval, In some implementations, the first MLD may be a non-AP MLD, and the second MLD may be an AP MLD with the first peer STA being a first AP.

In some implementations, in receiving the one or more beacon frames, process 600 may involve processor 512 performing certain operations. For instance, process 600 may involve a second AP affiliated with the second MLD ending frame exchanges initiated with a second STA affiliated with the first MLD on one other link of the one or more EMLSR links at least an EMLSR transition delay before the first AP transmits each of the one or more beacon frames at the negotiated TBTT. Furthermore, process 600 may involve the second STA ending a TXOP on the one other link at least the EMLSR transition delay before the first STA receives each of the one or more beacon frames at the negotiated TBTT. In such cases, the EMLSR transition delay may be indicated in an EMLSR Transition Delay subfield of an EML Capabilities subfield in a Common Info field of a Basic Multi-Link element in a management frame transmitted between the first MLD and the second MLD.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds 'true' for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the 'true' scope being indicated by the following claims.

## Claims

1. A method, comprising:
enabling, by a first multi-link device, in the following also referred to as MLD, an enhanced multi-link single-radio, in the following also referred to as EMLSR, mode (610); and
establishing, by the first MLD, concurrent target wake time, in the following also referred to as TWT, agreements with a second MLD on multiple links including at least a first link and a second link of a plurality of links (620),
wherein the establishing of the concurrent TWT agreements comprises:
transmitting, by a first station, in the following also referred to as STA, affiliated with the first MLD, a TWT request to a first peer STA affiliated with the second MLD (622); and
receiving, by the first STA, a TWT response from the first peer STA (624),
**characterized in that**
the TWT request contains a TWT element that comprises a Link Identifier, in the following also referred to as ID, Bitmap subfield indicating the multiple links on which the concurrent TWT agreements are requested to be established, and
the TWT response contains another TWT element that comprises another Link ID Bitmap subfield indicating the multiple links on which the concurrent TWT agreements are agreed to be established.

2. An apparatus (510) implementable in a first multi-link device, in the following also referred to as MLD, comprising:
a transceiver (516) configured to communicate wirelessly with a second MLD; and
a processor (512) coupled to the transceiver (516) and configured to perform operations comprising:
enabling an enhanced multi-link single-radio, in the following also referred to as EMLSR, mode; and
establishing, via the transceiver (516), concurrent target wake time, in the following also referred to as TWT, agreements with the second MLD on multiple links including at least a first link and a second link of a plurality of links, wherein the establishing of the concurrent TWT agreements comprises:
transmitting, as a first station, in the following also referred to as STA, affiliated with the first MLD, a TWT request to a first peer STA affiliated with the second MLD; and
receiving, as the first STA, a TWT response from the first peer STA,
**characterized in that**
the TWT request contains a TWT element that comprises a Link Identifier, in the following also referred to as ID, Bitmap subfield indicating the multiple links on which the concurrent TWT agreements are requested to be established, and
the TWT response contains another TWT element that comprises another Link ID Bitmap subfield indicating the multiple links on which the concurrent TWT agreements are agreed to be established.

3. The method of Claim 1 or the apparatus of Claim 2, wherein the TWT element further comprises a Synchronous TWT Requested subfield, and wherein, responsive to a predefined value being set in the Synchronous TWT Requested subfield, all of the multiple links are to be aligned with respect to TWT service period, in the following also referred to as SPs, on the multiple links.

4. The method of Claim 1 or 3, further comprising:
terminating, by the first MLD, the concurrent TWT agreements with the second MLD by transmitting a TWT Teardown frame before switching from the EMLSR mode to a single-radio mode; or
the apparatus of Claim 2 or 3, wherein the processor (512) is further configured to perform operations comprising:
terminating, via the transceiver (516), the concurrent TWT agreements with the second MLD by transmitting a TWT Teardown frame before switching from the EMLSR mode to a single-radio mode.

5. The method or the apparatus of Claim 4, wherein the terminating of the concurrent TWT agreements comprises terminating the concurrent TWT agreements by terminating a TWT agreement on the second link responsive to the TWT Teardown frame indicating termination of the TWT agreement on the second link.

6. The method or the apparatus of Claim 4 or 5, wherein the TWT Teardown frame comprises at least a Link ID Bitmap Present subfield indicating whether or not a Teardown Link ID Bitmap subfield is present in the TWT Teardown frame, and wherein, responsive to the Link ID Bitmap Present subfield indicating the Teardown Link ID Bitmap subfield being present in the TWT Teardown frame, the Teardown Link ID Bitmap subfield indicates one or more links of the multiple links to which the terminating applies.

7. The method or the apparatus of any one of Claims 4 to 6, wherein the TWT Teardown frame comprises at least a Teardown All TWT subfield, and wherein, responsive to a predefined value being set in the Teardown All TWT subfield, the terminating comprises terminating the concurrent TWT agreements on all of the multiple links.

8. The method of any one of Claims 4 to 7, wherein the terminating of the concurrent TWT agreements comprises transmitting, by the first STA, the TWT Teardown frame to the first peer STA on the first link to indicate termination of a respective TWT agreement on at least one link of the multiple links; or
the apparatus of any one of Claims 4 to 7, wherein the terminating of the concurrent TWT agreements comprises transmitting, as the first STA, the TWT Teardown frame to the first peer STA on the first link to indicate termination of a respective TWT agreement on at least one link of the multiple links.

9. The method of any one of Claims 4 to 8, wherein the terminating of the concurrent TWT agreements comprises transmitting, by a second STA affiliated with the first MLD, the TWT Teardown frame to a second peer STA affiliated with the second MLD on the second link with no Teardown Link ID Bitmap subfield in the TWT Teardown frame to indicate termination of a respective TWT agreement on the second link; or
the apparatus of any one of Claims 4 to 8, wherein the terminating of the concurrent TWT agreements comprises transmitting, as a second STA affiliated with the first MLD, the TWT Teardown frame to a second peer STA affiliated with the second MLD on the second link with no Teardown Link ID Bitmap subfield in the TWT Teardown frame to indicate termination of a respective TWT agreement on the second link.

10. The method of any one of Claims 1 and 3 to 9, further comprising:
negotiating, by a STA affiliated with the first MLD, a Target Beacon Transmission Time, in the following also referred to as TBTT, and a wake interval with a first peer STA affiliated with the second MLD while in the EMLSR mode, and
receiving, by the first STA, one or more beacon frames from the first peer STA on one link of one or mor EMLSR links of the plurality of links according to the negotiated TBTT and wake interval,
wherein the first MLD comprises a non-access point, in the following also referred to as non-AP, MLD, and
wherein the second MLD comprises an access point, in the following also referred to as AP, MLD and the first peer STA comprises a first AP; or
the apparatus of any one of Claims 2 to 9, wherein the processor (512) is further configured to perform operations comprising:
negotiating, as a first STA affiliated with the first MLD, a TBTT and a wake interval with a first peer STA affiliated with the second MLD while in the EMLSR mode; and
receiving, as the first STA, one or more beacon frames from the first peer STA on one link of one or mor EMLSR links of the plurality of links according to the negotiated TBTT and wake interval,
wherein the first MLD comprises a non-AP MLD, and
wherein the second MLD comprises an AP MLD and the first peer STA comprises a first AP.

11. The method or the apparatus of Claim 10, wherein the receiving of the one or more beacon frames comprises:
a second AP affiliated with the second MLD ending frame exchanges initiated with a second STA affiliated with the first MLD on one other link of the one or more EMLSR links at least an EMLSR transition delay before the first AP transmits each of the one or more beacon frames at the negotiated TBTT; and
the second STA ending a transmission opportunity, in the following also referred to as TXOP, on the one other link at least the EMLSR transition delay before the first STA receives each of the one or more beacon frames at the negotiated TBTT,
wherein the EMLSR transition delay is indicated in an EMLSR Transition Delay subfield of an enhanced multi-link, in the following also referred to as EML, Capabilities subfield in a Common Info field of a Basic Multi-Link element in a management frame transmitted between the first MLD and the second MLD.

## Patentansprüche

1. Verfahren, umfassend:
Aktivieren, durch eine erste Mehrfachverbindungsvorrichtung, im Folgenden auch als MLD bezeichnet, eines verbesserten Mehrfachverbindung-Einzelfunk, im Folgenden auch als EMLSR bezeichnet, -Modus (610); und
Herstellen, durch die erste MLD, von gleichzeitigen Zielaufwachzeit, im Folgenden auch als TWT bezeichnet, -Vereinbarungen mit einer zweiten MLD auf mehreren Verbindungen, einschließlich mindestens einer ersten Verbindung und einer zweiten Verbindung einer Vielzahl von Verbindungen (620),
wobei das Herstellen der gleichzeitigen TWT-Vereinbarungen umfasst:
Übertragen, durch eine erste Station, im Folgenden auch als STA bezeichnet, die mit der ersten MLD verbunden ist, einer TWT-Anforderung an eine erste Peer-STA, die mit der zweiten MLD verbunden ist (622); und
Empfangen, durch die erste STA, einer TWT-Antwort von der ersten Peer-STA (624),
**dadurch gekennzeichnet, dass**
die TWT-Anforderung ein TWT-Element enthält, das ein Verbindungskennung, im Folgenden auch als Verbindungs-ID bezeichnet, -Bitmap-Unterfeld umfasst, das die mehreren Verbindungen angibt, für die angefordert ist, die gleichzeitigen TWT-Vereinbarungen herzustellen, und
die TWT-Antwort ein anderes TWT-Element enthält, das ein anderes Verbindungs-ID-Bitmap-Unterfeld umfasst, das die mehreren Verbindungen angibt, für die vereinbart ist, die gleichzeitigen TWT-Vereinbarungen herzustellen.

2. Vorrichtung (510), die in einer ersten Mehrfachverbindungsvorrichtung, im Folgenden auch als MLD bezeichnet, implementierbar ist, umfassend:
einen Transceiver (516), der konfiguriert ist, drahtlos mit einer zweiten MLD zu kommunizieren; und
einen Prozessor (512), der mit dem Transceiver (516) gekoppelt und konfiguriert ist, Operationen durchzuführen, umfassend:
Aktivieren eines verbesserten Mehrfachverbindung-Einzelfunk, im Folgenden auch als EMLSR bezeichnet, -Modus; und
Herstellen, über den Transceiver (516), von gleichzeitigen Zielaufwachzeit, im Folgenden auch als TWT bezeichnet, -Vereinbarungen mit der zweiten MLD auf mehreren Verbindungen, einschließlich mindestens einer ersten Verbindung und einer zweiten Verbindung einer Vielzahl von Verbindungen, wobei das Herstellen der gleichzeitigen TWT-Vereinbarungen umfasst:
Übertragen, als eine erste Station, im Folgenden auch als STA bezeichnet, die mit der ersten MLD verbunden ist, einer TWT-Anforderung an eine erste Peer-STA, die mit der zweiten MLD verbunden ist; und
Empfangen, als die erste STA, einer TWT-Antwort von der ersten Peer-STA,
**dadurch gekennzeichnet, dass**
die TWT-Anforderung ein TWT-Element enthält, das ein Verbindungskennung, im Folgenden auch als Verbindungs-ID bezeichnet, -Bitmap-Unterfeld umfasst, das die mehreren Verbindungen angibt, für die angefordert ist, die gleichzeitigen TWT-Vereinbarungen herzustellen, und
die TWT-Antwort ein anderes TWT-Element enthält, das ein anderes Verbindungs-ID-Bitmap-Unterfeld umfasst, das die mehreren Verbindungen angibt, für die vereinbart ist, die gleichzeitigen TWT-Vereinbarungen herzustellen.

3. Verfahren nach Anspruch 1 oder Vorrichtung nach Anspruch 2, wobei das TWT-Element ferner ein Synchron-TWT-Angefordert-Unterfeld umfasst, und wobei als Reaktion darauf, dass ein vordefinierter Wert in dem Synchron-TWT-Angefordert-Unterfeld gesetzt ist, alle der mehreren Verbindungen in Bezug auf die TWT- Dienstperiode, im Folgenden auch als SPs bezeichnet, auf den mehreren Verbindungen auszurichten sind.

4. Verfahren nach Anspruch 1 oder 3, ferner umfassend:
Beenden, durch die erste MLD, der gleichzeitigen TWT-Vereinbarungen mit der zweiten MLD durch Übertragen eines TWT-Teardown-Rahmens vor dem Umschalten von dem EMLSR-Modus zu einem Einzelfunk-Modus; oder
Vorrichtung nach Anspruch 2 oder 3, wobei der Prozessor (512) ferner konfiguriert ist, Operationen durchzuführen, umfassend:
Beenden, über den Transceiver (516), der gleichzeitigen TWT-Vereinbarungen mit der zweiten MLD durch Übertragen eines TWT-Teardown-Rahmens vor dem Umschalten von dem EMLSR-Modus zu einem Einzelfunk-Modus.

5. Verfahren oder Vorrichtung nach Anspruch 4, wobei das Beenden der gleichzeitigen TWT-Vereinbarungen das Beenden der gleichzeitigen TWT-Vereinbarungen durch Beenden einer TWT-Vereinbarung auf der zweiten Verbindung als Reaktion darauf umfasst, dass der TWT-Teardown-Rahmen die Beendigung der TWT-Vereinbarung auf der zweiten Verbindung angibt.

6. Verfahren oder Vorrichtung nach Anspruch 4 oder 5, wobei der TWT-Teardown-Rahmen mindestens ein Verbindungs-ID-Bitmap-Vorhanden-Unterfeld umfasst, das angibt, ob ein Teardown-Verbindungs-ID-Bitmap-Unterfeld in dem TWT-Teardown-Rahmen vorhanden ist oder nicht, und wobei als Reaktion darauf, dass das Verbindungs-ID-Bitmap-Vorhanden-Unterfeld angibt, dass das Teardown-Verbindungs-ID-Bitmap-Unterfeld in dem TWT-Teardown-Rahmen vorhanden ist, das Teardown-Verbindungs-ID-Bitmap-Unterfeld eine oder mehrere Verbindungen der mehreren Verbindungen angibt, für die das Beenden gilt.

7. Verfahren oder Vorrichtung nach einem der Ansprüche 4 bis 6, wobei der TWT-Teardown-Rahmen mindestens ein Teardown-All-TWT-Unterfeld umfasst, und wobei als Reaktion darauf, dass ein vordefinierter Wert in dem Teardown-All-TWT-Unterfeld gesetzt ist, das Beenden das Beenden der gleichzeitigen TWT-Vereinbarungen auf allen der mehreren Verbindungen umfasst.

8. Verfahren nach einem der Ansprüche 4 bis 7, wobei das Beenden der gleichzeitigen TWT-Vereinbarungen das Übertragen, durch die erste STA, des TWT-Teardown-Rahmens an die erste Peer-STA auf der ersten Verbindung umfasst, um die Beendigung einer jeweiligen TWT-Vereinbarung auf mindestens einer Verbindung der mehreren Verbindungen anzugeben; oder
Vorrichtung nach einem der Ansprüche 4 bis 7, wobei das Beenden der gleichzeitigen TWT-Vereinbarungen das Übertragen, als die erste STA, des TWT-Teardown-Rahmens an die erste Peer-STA auf der ersten Verbindung umfasst, um die Beendigung einer jeweiligen TWT-Vereinbarung auf mindestens einer Verbindung der mehreren Verbindungen anzugeben.

9. Verfahren nach einem der Ansprüche 4 bis 8, wobei das Beenden der gleichzeitigen TWT-Vereinbarungen das Übertragen, durch eine zweite STA, die mit der ersten MLD verbunden ist, des TWT-Teardown-Rahmens an eine zweite Peer-STA, die mit der zweiten MLD verbunden ist, auf der zweiten Verbindung ohne Teardown-Verbindungs-ID-Bitmap-Unterfeld in dem TWT-Teardown-Rahmen umfasst, um die Beendigung einer jeweiligen TWT-Vereinbarung auf der zweiten Verbindung anzugeben; oder
Vorrichtung nach einem der Ansprüche 4 bis 8, wobei das Beenden der gleichzeitigen TWT-Vereinbarungen das Übertragen, als eine zweite STA, die mit der ersten MLD verbunden ist, des TWT-Teardown-Rahmens an eine zweite Peer-STA, die mit der zweiten MLD verbunden ist, auf der zweiten Verbindung ohne Teardown-Verbindungs-ID-Bitmap-Unterfeld in dem TWT-Teardown-Rahmen umfasst, um die Beendigung einer jeweiligen TWT-Vereinbarung auf der zweiten Verbindung anzugeben.

10. Verfahren nach einem der Ansprüche 1 und 3 bis 9, ferner umfassend:
Verhandeln, durch eine STA, die mit der ersten MLD verbunden ist, einer Ziel-Beacon-Übertragungszeit, im Folgenden auch als TBTT bezeichnet, und eines Aufwachintervalls mit einer ersten Peer-STA, die mit der zweiten MLD verbunden ist, während sie sich im EMLSR-Modus befindet, und
Empfangen, durch die erste STA, eines oder mehrerer Beacon-Rahmen von der ersten Peer-STA auf einer Verbindung von einer oder mehreren EMLSR-Verbindungen der Vielzahl von Verbindungen gemäß der verhandelten TBTT und dem verhandelten Aufwachintervall,
wobei die erste MLD eine Nicht-Zugangspunkt, im Folgenden auch als Nicht-AP bezeichnet, -MLD umfasst, und
wobei die zweite MLD eine Zugangspunkt, im Folgenden auch als AP bezeichnet, -MLD umfasst und die erste Peer-STA einen ersten AP umfasst; oder
Vorrichtung nach einem der Ansprüche 2 bis 9, wobei der Prozessor (512) ferner konfiguriert ist, Operationen durchzuführen, umfassend:
Verhandeln, als eine erste STA, die mit der ersten MLD verbunden ist, einer TBTT und eines Aufwachintervalls mit einer ersten Peer-STA, die mit der zweiten MLD verbunden ist, während sie sich im EMLSR-Modus befindet; und
Empfangen, als die erste STA, eines oder mehrerer Beacon-Rahmen von der ersten Peer-STA auf einer Verbindung von einer oder mehreren EMLSR-Verbindungen der Vielzahl von Verbindungen gemäß der verhandelten TBTT und dem verhandelten Aufwachintervall,
wobei die erste MLD eine Nicht-AP-MLD umfasst, und
wobei die zweite MLD eine AP-MLD umfasst und die erste Peer-STA einen ersten AP umfasst.

11. Verfahren oder Vorrichtung nach Anspruch 10, wobei das Empfangen des einen oder der mehreren Beacon-Rahmen umfasst:
ein zweiter AP, der mit der zweiten MLD verbunden ist, beendet Rahmenaustausche, die mit einer zweiten STA initiiert wurden, die mit der ersten MLD verbunden ist, auf einer anderen Verbindung der einen oder mehreren EMLSR-Verbindungen mindestens eine EMLSR-Übergangsverzögerung bevor der erste AP jeden des einen oder der mehreren Beacon-Rahmen bei der verhandelten TBTT überträgt; und
die zweite STA beendet eine Übertragungsgelegenheit, im Folgenden auch als TXOP bezeichnet, auf der einen anderen Verbindung mindestens die EMLSR-Übergangsverzögerung bevor die erste STA jeden des einen oder der mehreren Beacon-Rahmen bei der verhandelten TBTT empfängt,
wobei die EMLSR-Übergangsverzögerung in einem EMLSR-Übergangsverzögerungsunterfeld eines verbesserte-Mehrfachverbindung, im Folgenden auch als EML bezeichnet, -Fähigkeiten-Unterfelds in einem Common-Info-Feld eines Basis-Mehrfachverbindung-Elements in einem Verwaltungsrahmen angezeigt wird, der zwischen der ersten MLD und der zweiten MLD übertragen wird.

## Revendications

1. Procédé, comprenant :
l'activation, par un premier dispositif à liaisons multiples, ci-après également appelé MLD, d'un mode radio unique à liaisons multiples amélioré, ci-après également appelé EMLSR, (610) ; et
l'établissement, par le premier MLD, d'accords de temps de réveil cible, ci-après également appelé TWT, concurrent avec un second MLD sur de multiples liaisons incluant au moins une première liaison et une seconde liaison d'une pluralité de liaisons (620),
dans lequel l'établissement des accords TWT concurrents comprend :
la transmission, par une première station, ci-après également appelée STA, affiliée au premier MLD, d'une demande TWT à une première STA homologue affiliée au second MLD (622) ; et
la réception, par la première STA, d'une réponse TWT en provenance de la première STA homologue (624),
**caractérisé en ce que**
la demande TWT contient un élément TWT qui comprend un sous-champ de bitmap d'identifiant, ci-après également appelé ID, de liaison indiquant les multiples liaisons sur lesquelles les accords TWT concurrents sont demandés pour être établis, et
la réponse TWT contient un autre élément TWT qui comprend un autre sous-champ de bitmap d'ID de liaison indiquant les multiples liaisons sur lesquelles les accords TWT concurrents sont accordés pour être établis.

2. Appareil (510) pouvant être mis en œuvre dans un premier dispositif à liaisons multiples, ci-après également appelé MLD, comprenant :
un émetteur-récepteur (516) configuré pour communiquer sans fil avec un second MLD ; et
un processeur (512) couplé à l'émetteur-récepteur (516) et configuré pour effectuer des opérations comprenant :
l'activation d'un mode radio unique à liaisons multiples amélioré, ci-après également appelé EMLSR ; et
l'établissement, via l'émetteur-récepteur (516), d'accords de temps de réveil cible, ci-après également appelé TWT, concurrent avec le second MLD sur de multiples liaisons incluant au moins une première liaison et une seconde liaison d'une pluralité de liaisons, dans lequel l'établissement des accords TWT concurrents comprend :
la transmission, en tant que première station, ci-après également appelée STA, affiliée au premier MLD, d'une demande TWT à une première STA homologue affiliée au second MLD ; et
la réception, en tant que première STA, d'une réponse TWT en provenance de la première STA homologue,
**caractérisé en ce que**
la demande TWT contient un élément TWT qui comprend un sous-champ de bitmap d'identifiant, ci-après également appelé ID, de liaison indiquant les multiples liaisons sur lesquelles les accords TWT concurrents sont demandés pour être établis, et
la réponse TWT contient un autre élément TWT qui comprend un autre sous-champ de bitmap d'ID de liaison indiquant les multiples liaisons sur lesquelles les accords TWT concurrents sont accordés pour être établis.

3. Procédé selon la revendication 1 ou appareil selon la revendication 2, dans lequel l'élément TWT comprend en outre un sous-champ de demande TWT synchrone, et dans lequel, en réponse à une valeur prédéfinie qui est définie dans le sous-champ de demande TWT synchrone, toutes les multiples liaisons doivent être alignées par rapport à une période de service TWT, ci-après également appelée SP, sur les multiples liaisons.

4. Procédé selon la revendication 1 ou 3, comprenant en outre :
la terminaison, par le premier MLD, des accords TWT concurrents avec le second MLD par la transmission d'une trame de suppression TWT avant la commutation du mode EMLSR à un mode radio unique ; ou
appareil selon la revendication 2 ou 3, dans lequel le processeur (512) est en outre configuré pour effectuer des opérations comprenant :
la terminaison, via l'émetteur-récepteur (516), des accords TWT concurrents avec le second MLD par la transmission d'une trame de suppression TWT avant la commutation du mode EMLSR à un mode radio unique.

5. Procédé ou appareil selon la revendication 4, dans lequel la terminaison des accords TWT concurrents comprend la terminaison des accords TWT concurrents par la terminaison d'un accord TWT sur la seconde liaison en réponse à la trame de suppression TWT indiquant la terminaison de l'accord TWT sur la seconde liaison.

6. Procédé ou appareil selon la revendication 4 ou 5, dans lequel la trame de suppression TWT comprend au moins un sous-champ de bitmap d'ID de liaison présent indiquant si un sous-champ de bitmap d'ID de liaison de suppression est présent ou non dans la trame de suppression TWT, et dans lequel, en réponse au sous-champ de bitmap d'ID de liaison présent indiquant que le sous-champ de bitmap d'ID de liaison de suppression est présent dans la trame de suppression TWT, le sous-champ de bitmap d'ID de liaison de suppression indique une ou plusieurs liaisons des multiples liaisons auxquelles la terminaison s'applique.

7. Procédé ou appareil selon l'une quelconque des revendications 4 à 6, dans lequel la trame de suppression TWT comprend au moins un sous-champ de suppression toutes les TWT, et dans lequel, en réponse à une valeur prédéfinie qui est définie dans le sous-champ de suppression toutes les TWT, la terminaison comprend la terminaison des accords TWT concurrents sur toutes les multiples liaisons.

8. Procédé selon l'une quelconque des revendications 4 à 7, dans lequel la terminaison des accords TWT concurrents comprend la transmission, par la première STA, de la trame de suppression TWT à la première STA homologue sur la première liaison pour indiquer la terminaison d'un accord TWT respectif sur au moins une liaison des multiples liaisons ; ou
appareil selon l'une quelconque des revendications 4 à 7, dans lequel la terminaison des accords TWT concurrents comprend la transmission, en tant que première STA, de la trame de suppression TWT à la première STA homologue sur la première liaison pour indiquer la terminaison d'un accord TWT respectif sur au moins une liaison des multiples liaisons.

9. Procédé selon l'une quelconque des revendications 4 à 8, dans lequel la terminaison des accords TWT concurrents comprend la transmission, par une seconde STA affiliée au premier MLD, de la trame de suppression TWT à une seconde STA homologue affiliée au second MLD sur la seconde liaison sans aucun sous-champ de bitmap d'ID de liaison de suppression dans la trame de suppression TWT pour indiquer la terminaison d'un accord TWT respectif sur la seconde liaison ; ou
appareil selon l'une quelconque des revendications 4 à 8, dans lequel la terminaison des accords TWT concurrents comprend la transmission, en tant que seconde STA affiliée au premier MLD, de la trame de suppression TWT à une seconde STA homologue affiliée au second MLD sur la seconde liaison sans aucun sous-champ de bitmap d'ID de liaison de suppression dans la trame de suppression TWT pour indiquer la terminaison d'un accord TWT respectif sur la seconde liaison.

10. Procédé selon l'une quelconque des revendications 1 et 3 à 9, comprenant en outre :
la négociation, par une STA affiliée au premier MLD, d'un temps de transmission de balise cible, ci-après également appelé TBTT, et d'un intervalle de réveil avec une première STA homologue affiliée au second MLD pendant le mode EMLSR, et
la réception, par la première STA, d'une ou plusieurs trames de balise en provenance de la première STA homologue sur une liaison d'une ou plusieurs liaisons EMLSR de la pluralité de liaisons selon le TBTT et l'intervalle de réveil négociés,
dans lequel le premier MLD comprend un point de non-accès, ci-après également appelé non-AP, MLD, et
dans lequel le second MLD comprend un point d'accès, ci-après également appelé AP, MLD et la première STA homologue comprend un premier AP ; ou
appareil selon l'une quelconque des revendications 2 à 9, dans lequel le processeur (512) est en outre configuré pour effectuer des opérations comprenant :
la négociation, en tant que première STA affiliée au premier MLD, d'un TBTT et d'un intervalle de réveil avec une première STA homologue affiliée au second MLD pendant le mode EMLSR ; et
la réception, en tant que première STA, d'une ou plusieurs trames de balise en provenance de la première STA homologue sur une liaison d'une ou plusieurs liaisons EMLSR de la pluralité de liaisons selon le TBTT et l'intervalle de réveil négociés,
dans lequel le premier MLD comprend un MLD non-AP, et
dans lequel le second MLD comprend un MLD AP et la première STA homologue comprend un premier AP.

11. Procédé ou appareil selon la revendication 10, dans lequel la réception des une ou plusieurs trames de balise comprend :
la terminaison, par un second AP affilié au second MLD, d'échanges de trame initiés avec une seconde STA affiliée au premier MLD sur une autre liaison des une ou plusieurs liaisons EMLSR d'au moins un délai de transition EMLSR avant que le premier AP ne transmette chacune des une ou plusieurs trames de balise au TBTT négocié ; et
la terminaison, par la seconde STA, d'une opportunité de transmission, ci-après également appelée TXOP, sur l'autre liaison au moins du délai de transition EMLSR avant que la première STA ne reçoive chacune des une ou plusieurs trames de balise au TBTT négocié,
dans lequel le délai de transition EMLSR est indiqué dans un sous-champ de délai de transition EMLSR d'un sous-champ de capacités de liaisons multiples amélioré, ci-après également appelé EML, dans un champ d'informations communes d'un élément de liaisons multiples de base dans une trame de gestion transmise entre le premier MLD et le second MLD.
